# EUROPÄISCHE PATENTANMELDUNG

(11) **EP 0 773 233 A2**
(43) Veröffentlichungstag der Anmeldung: **14.05.1997**
(21) Anmeldenummer: 96117648.4
(22) Anmeldetag: 04.11.1996
(51) Int. Cl.: C08F 8/00, C08F 291/08, C08F 289/00

(54) **Lösemittel-freie Kunstharze und Kunstharzmischungen**

(30) Priorität: 13.11.1995 DE 19542181
(71) Anmelder: Vianova Resins GmbH, 55252 Mainz-Kastel (DE)
(72) Erfinder: Mergardt, Bernd, Dr., 21629 Neu Wulmstorf (DE)

(57) **Zusammenfassung**

Lösemittel-freie Kunstharzmischungen, die sich als Bindemittel für Druckfarben und Holzgrundierungen eignen, werden erhalten, indem
a) ein gegebenenfalls neutralisiertes oder teilneutralisiertes Kunstharz A durch Polymerisation von α,β-ethylenisch ungesättigten (C₃-C₆)-Carbonsäuren mit weiteren ethylenisch ungesättigten Verbindungen und Umsetzung mit einer Carbonsäuregruppen-haltigen Verbindung mit mindestens 7 Kohlenstoffatomen, hergestellt wird, und gegebenenfalls
b) ein wasserunlösliches Polymer B in Form von Latexteilchen durch Emulsionspolmerisation von ethylenisch ungesättigten Verbindungen in Gegenwart des Kunstharzes A hergestellt wird.

## Beschreibung

Die vorliegende Erfindung betrifft Lösemittel-freie Carbonsäuregruppen-haltige Kunstharze, die ungesättigte Naturstoffe enthalten, Verfahren zu deren Herstellung sowie deren Verwendung in Druckfarben auf Wasserbasis.

Die spezifischen Eigenschaften, die für eine Verwendung von Säuregruppen-haltigen Polymeren in ökologisch vorteilhaften Bindemitteln auf Wasserbasis, speziell auch für Druck-Coatings oder Holzbeschichtungen erforderlich sind, sind der Fachwelt allgemein bekannt. Sie werden im wesentlichen bestimmt von der Art und Menge der eingesetzten unpolaren und Säuregruppen-haltigen Monomere, vor allen Dingen aber durch die unterschiedlichen Herstellverfahren.

Die beschriebenen Herstellverfahren zur kontinuierlichen Polymerisation in Masse (EP-A 0 068 024 und DE-A 32 25 876) haben den Nachteil, daß neben den Monomeren auch spezielle Lösemittel oder Zusatzstoffen nötig sind, da sonst Channeling oder Plugging des Reaktors auftritt (G.E.H. Joosten, H.W. Hoogstraten, C. Ouwerkerk; Ind. Eng. Chem. Process Des. Dev. 1981, 20, 177). Diese Reststoffe sind nachträglich in der Regel nicht vollständig oder nur durch hohen technischen Aufwand zu entfernen, beispielsweise durch mehrere Entgasungsstufen.

Polymerisate auf Grundlage von Batchverfahren (EP-A 0 129 913) haben den Nachteil, daß die beschriebene Vorlage von Lösemitteln eine aufwendige Kreislauf-Wirtschaft erfordert. Insbesondere können die Produkte aber nicht vollständig ausdestilliert werden, da sonst Probleme infolge der nur schwer handhabbaren hohen Schmelzviskositäten auftreten.

So ist es in der Regel für die Druckfarbenhersteller nicht erkennbar, welche Lösemittel oder Zusatzstoffe in den Produkten noch in welcher Menge enthalten sind und ob es sich dabei beispielsweise um Ethylethylenglykolether (ECETOC, Technical Report No. 17, European Chemical Industry, Ecology & Toxicology Centre, Brussels, 1995) oder andere ökologisch umstrittene Stoffe handelt (Volatile Organic Components).

Ein weiterer wesentlicher Nachteil der vorgenannten Herstellverfahren tritt bei der praktischen Produkt-Konfektionierung als Festkomponente auf, da hier Explosionsgefahr durch elektrostatische Aufladung besteht.

Alternativ dazu sind bislang auch Lösemittel-freie Kunstharz-Systeme entwickelt worden, beispielsweise durch aufeinanderfolgende Emulsionspolymerisation von Carboxylgruppen enthaltenden Monomermischungen und unpolaren Monomermischungen (WO-A 91 049 90) oder durch Massepolymerisation von Carboxylgruppen enthaltenden Monomermischungen bei gleichzeitiger "in situ"-Kondensationsreaktion mit Monohydroxyverbindungen und anschließender Emulsionspolymerisation von unpolaren Monomeren (EP-A 0 643 080). Ein Nachteil dieser Kunstharz-Systeme ist aber die deutlich stärkere Schaumbildung der neutralisierten Makromoleküle beim praktischen Einsatz im "high-speed"-Drucken.

Diese unerwünschte Schaumbildung kann reduziert werden durch Polymere mit Säuregruppen, die in Gegenwart basischer Verbindungen synthetisiert werden (DE-Anmelde-Nr. 195 08 191.9). Hier ist aber in der Regel noch ein Zusatz von wasserlöslichen organischen Lösungsmitteln erforderlich, damit die gewünschten Produkteigenschaften erreicht werden.

Es war deshalb die Aufgabe der vorliegenden Erfindung, Säuregruppen-enthaltende Bindemittel für Druck-Coatings zu entwickeln, die frei sind von niedermolekularen Lösungs- oder Koaleszenzmitteln, nicht schäumen und für den praktischen Einsatz im "high-speed"-Drucken geeignet sind.

Die Aufgabe wird erfindungsgemäß dadurch gelöst, daß ein Kunstharz A erzeugt wird auf der Basis eines Carboxylgruppen-haltigen Copolymerisats, das zusätzlich mit einer Carbonsäuregruppen-haltigen Verbindung mit mindestens 7 Kohlenstoffatomen modifiziert ist. Aus dem Kunstharz A kann durch Eintrag in gegebenenfalls mit Neutralisationsmittel versehenem Wasser eine viskose Harzlösung erhalten werden, in der durch Polymerisation von unpolaren ethylenisch ungesättigten Monomeren ein Polymer B erzeugt werden kann, das in Form von Latexteilchen anfällt.

Gegenstand der Erfindung ist eine Lösemittel-freie Kunstharzmischung, enthaltend
a) ein gegebenenfalls neutralisiertes oder teilneutralisiertes Kunstharz A, hergestellt durch Polymerisation von α,β-ethylenisch ungesättigten (C₃-C₆)-Carbonsäuren mit weiteren ethylenisch ungesättigten Verbindungen und Umsetzung mit einer Carbonsäuregruppen-haltigen Verbindung mit mindestens 7 Kohlenstoffatomen, und gegebenenfalls
b) ein wasserunlösliches Polymer B in Form von Latexteilchen, herstellbar durch Emulsionspolmerisation von ethylenisch ungesättigten Verbindungen in Gegenwart des Kunstharzes A.

Ein weiterer Gegenstand der Erfindung ist ein Verfahren zur Herstellung einer Lösemittel-freien Kunstharzmischung, indem
a) ein Kunstharz A hergestellt wird durch Polymerisation von α,β-ethylenisch ungesättigten (C₃-C₆)-Carbonsäuren mit weiteren ethylenisch ungesättigten Verbindungen und umgesetzt wird mit einer Carbonsäuregruppen-haltigen Verbindung mit mindestens 7 Kohlenstoffatomen und gegebenenfalls anschließend neutralisiert oder teilneutralisiert wird und gegebenenfalls
b) ein wasserunlösliches Polymer B in Form von Latexteilchen hergestellt wird durch Emulsionspolymerisation von ethylenisch ungesättigten Verbindungen in Gegenwart des gegebenenfalls zumindest teilneutralisierten Polymeren A.

Gegenstand der vorliegenden Erfindung sind auch die Kunstharze A, hergestellt durch Polymerisation von α,β-ethylenisch ungesättigten (C₃-C₆)-Carbonsäuren mit weiteren ethylenisch ungesättigten Verbindungen und Umsetzung mit einer Carbonsäuregruppen-haltigen Verbindung mit mindestens 7 Kohlenstoffatomen.

Die erfindungsgemäßen Kunstharze A können in zumindest teilneutralisiertem Zustand der Gruppe der Polymer-Tenside zugerechnet werden. Sie verfügen in Wasser über ein effektives Aufnahmevermögen für Pigmente und Füllkörper. Dieses für Druck-Coatings erwünschte Verhalten sowie weitere spezifische Eigenschaften werden bestimmt von der Molekülgröße sowie von der Molekülarchitektur, also von Art, Menge und Verteilung geladener, polarer und unpolarer Anteile.

Wesentlich für die Eigenschaften der erfindungsgemäßen Kunstharze A sind, neben den zahlenmäßigen Verhältnisse der Comonomereinheiten, Anteil und Typ der Seitenketten, die Säurezahlen, molare Massen und deren Verteilungen, Glasübergangstemperaturen (T_{g}) und insbesondere auch die Reaktionsbedingungen bei der Synthese.

Die Säurezahlen (zur Neutralisation erforderliche Masse aus KOH, dividiert durch die Masse des Polymeren; gegebenenfalls in mg/g) der Kunstharze A liegen vorzugsweise im Bereich von 90 bis 400, insbesondere 170 bis 275. Der Massenanteil an in Estergruppen gebundenen Hydroxyverbindungen beträgt vorzugsweise zwischen 0 und 25, insbesondere zwischen 0 und 18 %. Vorzugsweise wird eine gewichtsmittlere molare Masse M_{w} von 300 bis 100.000 g/mol, insbesondere 800 bis 40.000 g/mol, besonders bevorzugt 1.000 bis 25.000 g/mol, erhalten. Die Glasübergangstemperaturen der Polymere liegen vorzugsweise zwischen 0 und 180 °C, insbesondere 30 und 160 °C, besonders bevorzugt 50 und 150 °C.

Gemäß der vorliegenden Erfindung ist zumindest eine teilweise Neutralisation der Carbonsäuregruppen-tragenden Monomere mit flüchtigen basischen Verbindungen während der Herstellung der erfindungsgemäßen Polymere A vorteilhaft. Die Carboxylgruppen-haltigen Monomere sind stärkere Säuren als die daraus hergestellten Carboxylgruppen-haltigen Polymere, so daß die Monomere die Polymeren aus ihren Salzen verdrängen. Daher steht während der gesamten Polymerisation immer ein ausreichender Anteil an neutralisierten Carboxylatgruppen-haltigen Monomeren für die Polymerisation zur Verfügung. Auf diese Weise wird vermutlich eine durch polare Wechselwirkung bedingte lokale Anhäufung der polaren Monomere während der Makromolekül-Bildung unterbunden, so daß die Monomere weitgehend statistisch in das Makromolekül eingebaut werden können.

Als α,β-ungesättigte (C₃-C₆)-Carbonsäure für die Polymere A sind ungesättigte Mono- oder Dicarbonsäuren oder deren Gemische einsetzbar. Als ungesättigte Monocarbonsäuren werden Acrylsäure, Methacrylsäure und/oder Crotonsäure verwendet. Dazu zählen auch Halbester von Malein- und Fumarsäure mit gesättigten Alkoholen, die 1 bis 10 Kohlenstoff-Atome enthalten. Als ungesättigte Dicarbonsäuren seien Dicarbonsäuren, die 4 bis 6 Kohlenstoffatome enthalten, genannt, beispielsweise Maleinsäure, Itaconsäure, Mesaconsäure, Fumarsäure, Methylenmalonsäure, Citraconsäure, deren Salze oder gegebenenfalls Anhydride. Der Massenanteil der α,β-ungesättigten Carbonsäuren beträgt vorzugsweise 5 bis 70 %, insbesondere 15 bis 55 %, bezogen auf die Gesamtmasse der Monomeren in den Polymeren A.

Als Comonomere für die Carbonsäuregruppen-haltigen Monomere eignen sich prinzipiell alle radikalisch polymerisierbaren ethylenisch ungesättigten Verbindungen, bevorzugt werden hydrophobe Monomere, beispielsweise Vinylaromaten oder offenkettige konjugierte Diene eingesetzt. Beispielsweise seien genannt Styrol, Vinyltoluol, α-Methylstyrol, Ethylstyrol, iso-Propylstyrol, tert.-Butylstyrol, 2,4-Dimethylstyrol, Diethylstyrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und/oder Phenylstyrol. Bevorzugt sind insbesondere Styrol, Vinyltoluol und α-Methylstyrol. Als offenkettige Diene sind zu nennen 1,3-Butadien, 2-Methyl-1,3-butadien, 2,3-Dimethyl-1,3-butadien, Pentadien, 2-Neopentyl-1,3-butadien und substituierte 1,3-Butadiene, wie 2-Chlor-1,3-butadien, 2-Cyan-1,3-butadien, substituierte geradkettige konjugierte Pentadiene, geradkettige und verzweigte konjugierte Hexadiene, andere geradkettige oder verzweigte konjugierte Diene mit in der Regel 4 bis 9 Kohlenstoffatomen und deren Mischungen. Der Massenanteil dieser Comonomere beträgt vorzugsweise 30 bis 95 %, insbesondere 45 bis 85 %, bezogen auf die Gesamtmasse der Monomeren in den Polymeren A.

Zur Erzielung spezieller Eigenschaften können auch weitere Ausgangsmonomere beispielsweise Ester von Acryl-, Methacryl- und Crotonsäure mit gesättigten Alkoholen, die 1 bis 12 Kohlenstoffe am Alkoholrest enthalten, einzeln oder im Gemisch, verwendet werden. Beispielsweise seien genannt Methylmethacrylat, Ethylacrylat, Butylacrylat, 2-Ethylhexylacrylat. Der Massenanteil dieser Comonomere beträgt vorzugsweise 0 bis 10 %, insbesondere 0 bis 5 %, bezogen auf die Gesamtmasse der Monomeren in den Polymeren A.

Als weitere Comonomere können Acrylamid, Methacrylamid, 2-Acrylamido-2-methylpropansulfonsäure, Acrylamidosulfonsäure, Vinylacetat, Vinylsulfonsäure, Allylsulfonsäure, Vinylphosphonsäure, Allylphosphonsäure, Acrylnitril, Methacrylnitril, Dimethylaminoethylacrylat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin und/oder deren Mischungen verwendet werden. Diejenigen Monomere dieser Gruppe, die Säuregruppen enthalten, können bei der Copolymerisation in Form der freien Säure oder auch in partiell oder vollständig mit Alkalimetallbasen oder Ammoniumbasen neutralisierter Form eingesetzt werden. Die basischen Acrylate, beispielsweise Diethylaminoethylacrylat, werden mit Säure neutralisiert bzw. quarternisiert und dann der Copolymerisation zugeführt. Außerdem können Vinylester von α,α-Dialkylalkanmonocarbonsäuren, beispielsweise Vinylester der Versaticsäure, aber auch Vinylacetat und Vinylpropionat verwendet werden. Diese modifizierenden Monomere dienen lediglich zur Erzielung spezieller Eigenschaften und sind mit Massenanteilen von 0 bis 10 %, vorzugsweise 0 bis 4 % in der Gesamtmasse an Monomeren, am Aufbau der Polymeren A beteiligt.

Die Copolymerisate werden erfindungsgemäß zusätzlich mit Carbonsäuregruppen-haltigen Verbindungen mit mindestens 7 Kohlenstoffatomen umgesetzt. Unter Carbonsäuregruppen-haltigen Verbindungen sind im Rahmen dieser Erfindung beispielsweise ungesättigte Naturharzsäuren sowie ungesättigte und gesättigte natürliche und synthetische Fettsäuren mit vorzugsweise 8 bis 30, insbesondere 9 bis 21 Kohlenstoffatomen, zu verstehen.

Als ungesättigte Naturharzsäuren eignen sich vorzugsweise Verbindungen aus der Reihe Kolophonium, Wurzelharz, Tallharz sowie disproportioniertes oder partiell hydriertes Naturharz beliebiger Anbaugebiete und Erntejahre oder deren Umsetzungsprodukte mit α,β-ungesättigten Carbonsäuren, vorzugsweise mit 4 bis 22, insbesondere 4 bis 7 Kohlenstoffatomen oder deren Anhydriden, insbesondere Fumarsäure, Maleinsäure, Maleinsäureanhydrid, Itaconsäure, Acrylsäure.

Geeignete natürliche Fettsäuren sind beispielsweise Kokosölfettsäure, Palmölfettsäure, Ricinusölfettsäure, Olivenölfettsäure, Erdnußölfettsäure, Rapsölfettsäure, Roßkastanienfettsäure, Barbussafettsäure, Fettsäure des Myricawachses, Dikafettsäure, Fettsäure des chinesischen Talgs, Fettsäure des Japanwachses, Baumwollsaatölfettsäure (Cottonölfettsäure), Sojaölfettsäure, Sonnenblumenölfettsäure, Mohnölfettsäure, Safflorölfettsäure, Leinölfettsäure, Perillaölfettsäure Oiticicaölfettsäure, Holzölfettsäure, Juvandolfettsäure, Kojuvandolfettsäure, Tallölfettsäure, Rindertalgfettsäure, Walölfettsäure, Fischölfettsäure wie Heringsölfettsäure, Mehandenölfettsäure, Sardinenölfettsäure, sowie vollständig oder teilweise hydrierte, isomerisierte, alkylierte, styrolisierte sowie dimere, trimere, mit Cycloadditions-Partnern veredelte oder anders modifizierte Fettsäuren, wie sie beispielsweise in D.F. Zinkel, J. Russell, Naval Stores, Pulp Chemicals Association, 1989, beschrieben sind.

Da sich die Naturstoffe verschiedener Anbaugebiete oder Erntejahre hinsichtlich ihrer Zusammensetzung unterscheiden können, können auch unterschiedliche Produkteigenschaften resultieren. Die Rezeptur kann dann jedoch durch geringfügige Änderungen dem jeweiligen Naturstoff angepaßt werden.

Als Fettsäuren im Rahmen dieser Erfindung gelten aber auch synthetische organische Säuren mit mindestens 7 Kohlenstoffatomen, beispielsweise ®Versatic 7d (2,2-Dimethylvaleriansäure, Fa. Shell), Versatic 7e (2-Ethyl-2-methylbuttersäure), Isoheptansäure, Isooctansäure, ®Cekanoic 8910 acid (Mischung aus C₈-,C₉-,C₁₀-Carbonsäuren, Fa. Exxon), 2-Ethylhexansäure, n-Heptansäure, vorzugsweise mit Säurezahlen kleiner oder gleich 350 mg/g und Säurezahlen größer oder gleich 150 mg/g, beispielsweise n-Nonansäure, Isononansäure, Versatic 9 (tert.-C₉ Monocarbonsäure), ®Neo acid 909 (C₉-Trialkylessigsäure, Fa. Exxon), 3,5,5-Trimethylhexansäure, Neo Decanoic acid (C₁₀-Trialkylessigsäure), Neo acid 910 (C₉-C₁₀-Trialkylessigsäure), Neo acid 928 (C₁₀-C₂₁-Trialkylessigsäure), Isodecansäure, Isoundecansäure, Isotridecan-Säure, Palmitinsäure, Stearinsäure.

Die erfindungsgemäßen Kunstharze A können auch vorzugsweise durch "in situ"-Kondensation mit Monohydroxyverbindung modifziert werden. Als Monohydroxyverbindungen werden Monoalkohole und monoveretherte Polyalkylenoxidverbindungen verstanden. Als Monoalkohole sind solche mit Alkan- oder Cycloalkanresten zu nennen, vorzugsweise (C₈-C₃₂)-Alkohole und deren Isomere, beispielsweise 2-Ethylhexanol, Octanol, Nonanol, Decanol, Dodecanol, ferner Stearyl-, Cetyl-, Ceryl-, Myricylalkohol, ®TCD-Alkohol M (Hoechst, MG: 166, OH-Zahl: 327), Wollwachsalkohole, Cholesterole, Borneole, Isoborneole, Tallölfettalkohole.

Optional können zur Modifizierung der Eigenschaften auch (C₁-C₆)-Alkohole mit Alkan- und Cycloalkanketten in Massenanteilen von 0 bis 35 % bezogen auf die Masse an Monohydroxyverbindungen eingesetzt werden, beispielsweise Butanol, Hexanol, Cyclohexanol und/oder deren Mischungen.

Als monoveretherte Polyalkylenoxidverbindungen werden Polyalkylenoxidverbindungen der allgemeinen Formel I

R¹-(O-CHR²-CHR³)ₙ-OH Formel I

eingesetzt. In dieser Formel steht R¹ für einen Alkyl-, Cycloalkyl, oder Phenylrest, vorzugsweise für einen Alkylrest mit 1 bis 12, insbesondere 1 bis 4 Kohlenstoffatomen, R² und R³ stehen für Wasserstoff oder Alkylreste mit 1 bis 4 Kohlenstoffatomen und n bedeutet 1 bis 10, vorzugsweise 1 bis 4. Als Beispiele derartiger Verbindungen seien Methylglykol, Ethylglykol, Butylglykol, Methyldiglykol, Ethyldiglykol, Butyldiglykol, Methyltriglykol, Ethyltriglykol, Butyltriglykol, Methyltetraglykol, Ethyltetraglykol, Butyltetraglykol, ®Polyglykol-M-250 (Hoechst, molare Masse: 260-275 g/mol, OH-Zahl: 204-215 mg/g), ®Polyglykol-M-350 (Hoechst, molare Masse: 335-365 g/mol, OH-Zahl: 154-167mg/g), Propylenglykolmethylether, Dipropylenglykolmethylether, Tripropylenglykolmethylether, Propylenglykol-n-butylether, Dipropylenglykol-n-butylether, Tripropylenglykol-n-butylether und Propylenglykolphenylether genannt.

Als Monohydroxyverbindungen gelten im Rahmen dieser Erfindung auch cyclische Ester, mit bevorzugt vier oder mehr Kohlenstoffatomen im Ring, wobei die Kohlenstoffatome des Rings anstelle von Wasserstoff auch andere Substituenten wie Alkyl, Cycloalkyl, Aryl, Aralkyl, Alkoxy enthalten können. Genannt seien Monoalkyl-substituierte ε-Caprolactone wie Monomethyl-, Monoethyl-, Monopropyl-, Monoisopropyl-, Monoethylhexyl-, Monodecyl-, Monododecyl-ε-caprolacton; weiterhin Dialkyl-ε-caprolactone, bei denen sich die zwei Alkylgruppen an dem gleichen oder an zwei unterschiedlichen nicht aber beide am ε-C-Atom befinden; weiterhin Trialkyl-ε-caprolactone, in denen zwei oder drei C-Atome im Ring substituiert sind, so lange wie sich am ε-C-Atom nicht zwei Substituenten befinden; weiterhin Alkoxy-ε-caprolactone wie Methoxy- und Ethoxy-ε-caprolacton; weiterhin Cycloalkyl-, Aryl- und Aralkyl-ε-caprolactone wie Cyclohexyl-, Phenyl- und Benzyl-ε-caprolacton. Bevorzugt ist das unsubstituierte ε-Caprolacton.

Andere cyclische Ester, die im Rahmen der Erfindung eingesetzt werden können und zumindest einen zur Ringöffnung befähigten inneren Ester enthalten, sind γ-Butyrolacton, γ-Valerolacton, Ethylencarbonat, Tetramethylencarbonat, 2,2-Dimethyl-4-phenyl-1,3-dioxolan-5-on, α-n-Propyl-δ-valerolacton, δ,δ-Dimethyl-δ-valerolacton, 3-Ethyl-1,4-dioxan-2-on, 3,3,6-Trimethyl-1,4-dioxan-2-on, Tetramethylglykolid, Tetraphenylglykolid, 3-Oxa-ε-caprolacton, β-Propiolacton, α,α-Bis(chlormethyl)propiolacton, β-Butyrolacton, Pivalolacton (PVL), Thiobutyrolacton (TBL), δ-Valerolacton (DVL), α,β,γ-Trimethoxy-δ-valerolacton, 1,4-Dithian-2,5-dion, Trimethylencarbonat, Neopentylcarbonat, Ethylenoxolan, β-Methyl-ε-iso-propyl-ε-caprolacton, Propylenoxolan, 4-Hydroxycyclohexancarbonsäurelacton, cis-Disalicylid und Trisalicylid, sowie deren Mischungen. Bevorzugte Verbindungen sind γ-Butyrolacton, δ-Valerolacton, Pivalolacton, Thiobutyrolacton, β-Butyrolacton, ε-Caprolacton sowie deren Mischungen.

Im Rahmen der Erfindung werden bei der Herstellung der Kunstharze A vorzugsweise flüchtige basische Verbindungen zugesetzt, die unter den Reaktionsbedingungen neutralisierend wirken, jedoch mit den Carboxylgruppen keine kovalente Bindung ausbilden. Vorzugsweise geeignet sind Amine, insbesondere tertiäre Amine, Amide, ferner Heterocyclen, insbesondere elektronenarme Heteroaromaten, beispielsweise Pyridin, Pyridazin, Pyrimidin, Pyrazin, Chinolin oder Isochinolin. Besonders bevorzugte flüchtige basische Neutralisationsreagenzien werden durch Formel II repräsentiert, 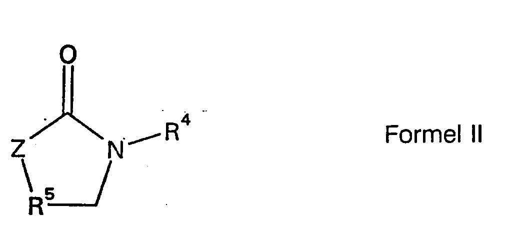 in der
- R⁴:: Alkyl oder Cycloalkyl,
- R⁵:: (CH₂)ₗ,
- Z:: (CH₂)ₘ oder O,
- l:: 0 bis 5 und
- m:: 1 bis 5 bedeuten.

Beispielhaft seien genannt N-Methyl-2-piperidin, N-Ethyl-2-piperidin, N-Methylpyrrolidon, N-Ethylpyrrolidon, N-Methylcaprolactam, 2,5-Piperazindion und N-Methyl-2-oxazolidon genannt. Besonders bevorzugt ist N-Methylpyrrolidon (N-Methyl-2-pyrrolidinon). Die flüchtigen basischen Neutralisationsreagenzien werden optional in einem Anteil zugesetzt, der eine ausreichende Neutralisation der Carbonsäuregruppen-haltigen Monomere vor ihrem Einbau in das wachsende Makromolekül gestattet. Für eine Polymerisation unter Standard-Bedingungen bedeutet dies, daß ein Stoffmengenanteil an flüchtigen basischen Neutralisationsreagenzien von vorzugsweise zumindestens 10 %, insbesondere 20 bis 70 %, bezogen auf die Stoffmenge der Carboxylgruppen-haltigen Monomeren, ausreicht.

Die Synthese der Polymere A wird üblicherweise bei Temperaturen von 20 bis 400 °C, vorzugsweise bei 80 bis 300 °C, insbesondere bei 100 bis 230 °C, durchgeführt. Vorteilhaft wird bei konstanter Temperatur unter Normaldruck und wenn notwendig unter gleichzeitiger Abtrennung von Niedrigsiedern, aber auch mit Überdruck, vorzugsweise bis 15 bar, insbesondere bis 5 bar, gearbeitet.

Die Initiierung der Polymerisationen bei der Herstellung der Polymeren A kann durch die dem Fachmann bekannten thermisch zerfallenden Radikalbildner aus der Reihe der Azoverbindungen, Peroxide, Persäureester oder Hydroperoxide erfolgen. Bevorzugt werden organische Peroxide eingesetzt, vorzugsweise Dialkylperoxide, insbesondere Di-tert.-Butylperoxid, Di-tert.-Amylperoxid oder Cumolhydroperoxid.

Falls erforderlich, können zur Einstellung des Polymerisationsgrades den Sachkundigen allgemein bekannte Regler zugesetzt werden, beispielsweise solche auf Basis organischer Thioverbindungen.

Zur Steuerung der Copolymerisation kann optional unter Zusatz eines neutralen Lösungsmittels gearbeitet werden, das nach Beendigung der Reaktion vorzugsweise im Vakuum entfernt wird. Der Massenanteil des Lösemittels beträgt bis zu 50 %, vorzugsweise bis zu 20 %, bezogen auf die Masse des Polymeren A. Insbesondere wird ganz ohne weiteres Lösemittel gearbeitet. Als Lösemittel ist bei Bedarf bevorzugt 3-Ethoxyethylpropionat einzusetzen, das unter den Reaktionsbedingungen als verkapptes Ethylacrylat reagiert.

Vor, während oder vorzugsweise nach der Polymerisation der aufgeführten Monomeren werden die Carboxylgruppen-haltigen Verbindungen mit mindestens 7 Kohlenstoffatomen zugesetzt und bei einer Temperatur von 100 bis 230 °C, vorzugsweise von 140 bis 200 °C, umgesetzt.

Nach Beendigung der Synthese können die in einer bevorzugten Variante enthaltenen flüchtigen basischen Neutralisationsreagenzien vom Kunstharz A vorzugsweise im Vakuum abgetrennt werden und stehen dann in der Regel ohne aufwendige Reinigung für den erneuten Einsatz zur Verfügung.

Die Carbonsäuregruppen-haltigen Kunstharze A lassen sich nach zumindest teilweiser Neutralisation sehr vorteilhaft als Bindemittel für wäßrige Druckfarben oder als Stabilisatoren für die Emulsionspolymerisation zu verwenden. Im allgemeinen ist es dabei ausreichend, eine Teilneutralisation von 50 bis 95 % durchzuführen, bevorzugt ist aber eine Überschuß-Neutralisation auf einen pH-Wert oberhalb von 7, vorzugsweise bis 9,5. Als Neutralisationsmittel werden Basen verwendet, wie Ammoniak, Alkalihydroxid, Alkalioxid, Erdalkalioxid, Zinkoxid, Metallcarbonate, Metallhydrogencarbonate oder Amine, beispielsweise Ethanolamin, 2-Amino-2-methyl-1-propanol, Diethanolamin, Triethylamin, Triethanolamin, Morpholin, 2-Amino-1-methyl-1-propanol, N,N-Dimethylethanolamin oder 2-Dimethylamino-2-methyl-1-propanol.

Zur Herstellung der Lösung des zumindest teilneutralisierten Carbonsäuregruppen-haltigen Kunstharzes A im Fabrikationsmaßstab hat sich die Inversverdünnung, also der direkte Eintrag der Harzschmelze des Kunstharzes A in Wasser/Neutralisationsmittel bei einer Harztemperatur von 100 bis 250 °C, vorzugsweise 150 bis 250 °C und mindestens bei Normaldruck, als vorteilhaft erwiesen. Zweckmäßigerweise wird die wäßrige Mischung dann noch bei mindestens Normaldruck 30 min bis 3 Std. bei 80 bis 95 °C, vorzugsweise bei ca. 90 °C gehalten.

Erfindungsgemäß enthalten die Kunstharzmischungen neben den Carbonsäuregruppen-haltigen Kunstharzen A optional auch Polymere B. Die Herstellung der Polymere B erfolgt über Emulsionspolymerisation in Gegenwart von zumindest teilneutralisiertem Kunstharz A. Das Carbonsäuregruppen-haltige Kunstharz A sollte in einer Menge vorhanden sein, die ausreichend ist, die erwünschten Emulgiereffekte herbeizuführen. Andererseits sollte, sowohl aus wirtschaftlichen Gründen als auch aus Gründen der Beeinflussung der anwendungstechnischen Eigenschaften der herzustellenden Emulsionspolymerisate, der Anteil der Kunstharze A nicht zu hoch sein. Es wird deshalb vorzugsweise ein Massenanteil an Kunstharz A von 4 bis 56 %, insbesondere 10 bis 50 %, bezogen auf die Summe der Massen der Feststoffanteile von A und B eingesetzt. Sehr gute Ergebnisse werden erzielt, wenn 12 bis 42 % von A bezogen auf die Summe der Massen von A und B, eingesetzt werden.

Verfahren zur Emulsionspolymerisation sind dem Fachmann bekannt. Üblicherweise zeichnen sie sich dadurch aus, daß in wäßriger Phase in Gegenwart von Radikalstartern und Emulgatoren, Schutzkolloiden eine radikalische Polymerisation von ethylenisch ungesättigten Monomeren durchgeführt wird. Die genannten Komponenten können auf verschiedene Weise in die Emulsionspolymerisation eingebracht werden. Bei Verwendung der erfindungsgemäßen Kunstharze A in Emulsionspolymerisationen kann auf die Gegenwart von niedermolekularen Tensiden und auf Schutzkolloide verzichtet werden. Die wäßrige Phase wird üblicherweise zum größten Teil vorgelegt, wobei eine anteilige Zugabe von Wasser während der Reaktion in Form einer Radikalstarterlösung oder Monomerpreemulsion möglich ist. Die Carbonsäuregruppen-haltigen Kunstharze A können in Lösung vollständig oder teilweise vorgelegt und der Rest während der Polymerisation zudosiert werden. Die Monomere können vollständig vorgelegt werden oder in reiner Form oder als Preemulsion mit Carbonsäuregruppen-haltigem Kunstharz A in Wasser zudosiert werden. Der Radikalstarter wird meistens teilweise vorgelegt und teilweise als wäßrige Lösung zudosiert. Als Vorlage wird die Mischung bezeichnet, die vor Einstellung der Reaktionstemperatur von üblicherweise 20 bis 99 °C in den Reaktor eingebracht wird. Im allgemeinen arbeitet man bei Temperaturen zwischen Raumtemperatur und 100 °C. Die Anwendung von vermindertem und erhöhtem Druck ist möglich, so daß die Polymerisationstemperatur auch 100 °C überschreiten und bis zu 130 °C und mehr betragen kann. Die Polymerisation wird meistens durch thermische Zersetzung der Radikalstarter oder durch Redoxsysteme eingeleitet und kann als beendet angesehen werden, wenn der größte Teil der durch radikalische Kettenreaktion umsetzbaren Monomeren abreagiert ist. Üblicherweise bleiben bei diesem Verfahren Massenanteile von ca. 0,001 bis 0,1 % Restmonomere zurück, bezogen auf die Masse der Polymeren. Weitere Verfahren bzw. Verfahrensvarianten werden beispielsweise in Ullmann, Enzyklopädie der technischen Chemie, 4. Auflage, Verlag Chemie, Weinheim (1980), Band 19, Seiten 132 ff. sowie in Encyclopedia of Polymer Science and Engineering, Volume 6, Wiley & Sons, New York 1986, Seiten 1-51, ausführlich geschildert.

Das Polymer B der Dispersion wird aus unpolaren Monomeren aufgebaut, die wenigstens zu einem erheblichen Teil in Wasser schwerlöslich sind und auch bei Änderung des pH-Wertes schwerlöslich bleiben. Unter schwerlöslich wird eine Löslichkeit von Massenanteilen von weniger als 10 %, insbesondere weniger als 5 % bei 25 °C verstanden, bezogen auf die Masse der Lösung. Der Anteil der schwerlöslichen Monomeren muß wenigstens so groß sein, daß das entstehende Emulsionspolymerisat unter den Polymerisationsbedingungen in der Wasserphase unlöslich ist und in Form dispergierter Teilchen vorliegt. Im Sinne der Erfindung werden vorzugsweise solche Mischungen verwendet, die zu Massenanteilen von mindestens 70 % und insbesondere zu mindestens 90 % aus schwerlöslichen Monomeren bestehen, bezogen auf die Summe der Massen aller Monomeren.

Geeignete Monomere enthalten mindestens eine ethylenisch ungesättigte Gruppe. Die Begriffe ethylenisch ungesättigt, vinylisch ungesättigt und α,β-ungesättigt werden synonym verwendet. Dem Fachmann ist bekannt, daß derartige Monomere sich unter den Bedingungen der Emulsionspolymerisation in einem wäßrigen Medium zu Polymeren verbinden lassen. Dazu zählen beispielsweise Vinylverbindungen, Styrole und Acrylate sowie deren Derivate. Zu den geeigneten Vinylverbindungen zählen beispielsweise Vinylchlorid sowie Vinylester wie Vinylacetat, Vinylpropionat, Vinylester der Versaticsäure aber auch Vinylfettsäureester wie Vinyllaurat. Geeignete Styrolverbindungen sind Styrol, Vinyltoluol, α-Methylstyrol, Ethylstyrol, iso-Propylstyrol, tert.-Butylstyrol, 2,4-Dimethylstyrol, Diethylstyrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und/oder Phenylstyrol. Bevorzugt sind insbesondere Styrol, Vinyltoluol und α-Methylstyrol. Als geeignete Acrylate seien beispielhaft Acrylsäure-, Methacrylsäure- und Crotonsäure-Ester genannt, beispielsweise auch Ester die Hydroxyfunktionen enthalten, wie Hydroxyethylacrylat und Hydroxyethylmethacrylat. Bei der Emulsionspolymerisation können selbstverständlich auch Mischungen derartiger ethylenisch ungesättigter Monomere polymerisiert werden, soweit sie sich zur Copolymerisation eignen. Um Dispersionen mit Glasübergangstemperaturen von über 75 °C zu erhalten, wird bevorzugt von Styrol oder Styrolderivaten und/oder Methacrylaten ausgegangen.

Die Polymerisation wird mit geeigneten Initiatoren durchgeführt. Als solche kommen diejenigen in Betracht, die in der Lage sind, eine radikalische wäßrige Emulsionspolymerisation auszulösen. Üblicherweise handelt es sich um wasserlösliche radikalbildende Verbindungen, beispielsweise Wasserstoffperoxyd, Peressigsäure, Perbenzoesäure sowie Perdisulfate, beispielsweise Kalium- oder Ammoniumperoxodisulfat, Perphosphate, Per-oxycarbonate und Hydroperoxide, wie tert.-Butylhydroperoxid. Mit Vorteil werden auch kombinierte Systeme, die aus wenigstens einem organischen Reduktionsmittel und wenigstens einem Peroxid und / oder Hydroperoxid zusammengesetzt sind, z.B. Natriumpersulfat und Natriumformaldehydsulfoxylat oder tert.-Butylhydroperoxid und das Natriumsalz der Hydroxymethansulfinsäure oder Wasserstoffperoxid und Ascorbinsäure verwendet. Andere geeignete Redoxkatalysatorsysteme sind beispielsweise Cumolhydroperoxid und Natriummetabisulfit oder Schwefeldioxid und Ammoniumpersulfat.

Bevorzugt sind auch kombinierte Systeme, die darüber hinaus eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit oder Natriumhydrogensulfit und anstelle von Wasserstoffperoxid häufig Alkalimetallperoxodisulfate und/oder Ammoniumperoxodisulfate angewendet werden. Anstelle eines wasserlöslichen Eisen(II)-Salzes wird häufig auch ein Vanadium-Salz oder eine Kombination aus wasserlöslichen Eisen- und Vanadium-Salzen benutzt.

Geeignet sind auch Azo-Verbindungen, wie 4,4-Azo-bis-(cyanopentansäure). Die Katalysatoren werden in üblichen katalytisch wirksamen Konzentrationen verwendet. Diese liegen im allgemeinen bei Massenanteilen zwischen 0,01 und 4,0 %, bezogen auf die Masse der Dispersion. Bevorzugt beträgt der Massenanteil der eingesetzten radikalischen Initiatorsysteme, bezogen auf die Gesamtmasse der zu polymerisierenden Monomeren, 0,1 bis 2%. Die Polymerisationsinitiatoren können in dem Fachmann bekannter Weise in Abhängigkeit von ihrer Art auf einmal ins Polymerisationsgefäß vorgelegt oder diesem nach Maßgabe ihres Verbrauchs, d.h. gemäß Polymerisationsfortschritt, kontinuierlich zugegeben werden.

In besonderen Ausführungsformen können weitere für die Emulsionspolymerisation übliche Komponenten verwendet werden. Dies sind beispielsweise pH-Puffer und beliebige andere Bestandteile, die neben dem erfindungsgemäßen Carbonsäuregruppen-haltigen Kunstharz A in der Emulsionspolymerisationsreaktionsmischung verwendet werden können und aus dem Stand der Technik zu Emulsionspolymerisationsverfahren bekannt sind. Dies sind beispielsweise wirkende Salze zur pH-Wert Regulierung wie Natriumhydrogencarbonat, Natriumcarbonat, Natriumacetat, Natriumphosphat oder andere Phosphate, Carbonate, Citrate, die zur Stabilisierung des pH-Wertes beitragen können. Oder aber beispielsweise die Mitverwendung von Molekulargewichtsreglern, die dem Fachmann hinlänglich bekannt sind, beispielsweise Schwefelverbindungen. Derartige Additive können bis zu Massenanteilen von 3 % in der Dispersion enthalten sein. Mit Vorteil wird bei der Durchführung der Emulsionspolymerisation neben der Einstellung einer Start-Polymerkonzentration eine Vorpolymerisation von einem Massenanteil von 1 bis 15 % der Initiator und Monomerenmasse durchgeführt, um die Qualität der Dispersion, insbesondere bezüglich der Transparenz und Viskosität, exakter einstellen zu können infolge der Entkopplung der Polymerisatteilchenbildungsphase von der Polymerisatteilchenwachstumsphase.

Ein weiterer Gegenstand der Erfindung ist die Verwendung der Lösemittel-freien Kunstharzmischungen nach Anspruch 1 zur Herstellung von Bindemitteln für Druckfarben und Drucklacke auf Wasserbasis zum "in-line-" oder "off-line-"Bedrucken von Papier, Pappe, Kartonagen, Folien und dergleichen, beispielsweise mit dem Farbwerk einer Bogen- oder Rollenoffsetmaschine, aus Feuchtwerken, separaten Lackieraggregaten von Bogen- oder Rollenoffset-Druckmaschinen, Bogenlackiermaschinen, Tief- und Flexodruckmaschinen. Dabei ist die wesentliche Aufgabe der Druckfarben und Drucklacke in einer Oberflächenveredelung oder einem Kleb- sowie Oberflächenschutz von Druckerzeugnisse zu sehen, die nach bekannten Druckverfahren (Offset, Tiefdruck, Hochdruck, Flexodruck oder auch Spezialdruckverfahren entsprechend DE-A 42 05 713) bereits bedruckt sind. In Frage kommt dabei auch eine Zwischenlagenschutz zur Trennung verschiedener Farbaufträge.

Weiterer Gegenstand der Erfindung ist auch die Verwendung der Lösemittelfreien Kunstharze nach Anspruch 1 zur Herstellung von Bindemitteln für schnelltrocknende und -schleifbare Grundierungen für Holzbeschichtungen.

Bei der Verwendung der erfindungsgemäßen Lösemittel-freien Kunstharze als Bindemittel/Bindemittelbestandteil für wäßrige Drucklacke und Druckfarben oder als Bindemittel/Bindemittelbestandteil für wäßrige Holzbeschichtungen beträgt deren Feststoff-Massenanteil im allgemeinen 40 bis 75 %.

Diese Lacke, Farben oder Primer enthalten Massenanteile von 1 bis 70 % erfindungsgemäße Dispersionen der Lösemittel-freien Kunstharze und/oder ggf. 1 bis 40 % erfindungsgemäße Festharzlösungen der Lösemittel-freien Kunstharze sowie 0 bis 60 % Glykole oder Glykolether (wie Cellosolve-Typen EE, EP, EB, oder EH, Carbitol-Typen DM, DE,DB, DH oder EHC sowie Propylenglykol-n-butyl-ether, Dipropylenglykol-n-butylether, Dipropylenglykolmethylether, Tripropylenglykolmethylether, Propylenglykolphenylether oder Propylenglykol-tert.-butylether), 0 bis 30 % Netzmittel, 0 bis 35 % Neutralisationsmittel (Basen), 0 bis 30 % natürliche und/oder synthetische Wachse, 0 bis 3 % Entschäumer, 0 bis 80 % Wasser, 0 bis 60 % Pigmente, 0 bis 2 % Additive zur Verbesserung der Abriebfestigkeit, beispielsweise ®Byk 301 (Byk-Mallinckrodt), 0 bis 3 % Additive zur Verbesserung der Kratzbeständigkeit, beispielsweise ®Aqua Polyfluo (Micro Powders), 0 bis 1,5 % Levelling-Agenzien, beispielsweise ®Triton X 200 (Rohm & Haas) sowie 0 bis 5 % Weichmacher, beispielsweise Triethylcitrat, Dibutylphthalat, Tributoxyethylphsphat oder Trimethylpentandioldiisobutyrat, die auch zur gezielten Verbesserung der Sperrschichteigenschaften eingesetzt werden.

Das Pigment/Bindemittel-Massenverhältnis bei Anreibeoperationen beträgt zwischen 5 : 95 und 95 : 5, bevorzugt 30 : 70 bis 70 : 30. Für die Anwendung als Pigmentanreibekomponenten sind auch Festkörper-Massenanteile von > 30 % zweckmäßig. Für den Aufbau dieser Stammfarben, pigmentierten Primern oder Druckfarben sind auch Mischungen verschiedener Typen von Lösemittel-freien Kunstharzen zweckmäßig. Zur Einarbeitung von Pigmenten (beispielsweise Titandioxid, Buntpigmente, synthetische Ruße), Füllstoffen (beispielsweise Talkum, Chinaclay, Wachse), Farbstoffen und Verlaufsmitteln in die Lösungen und/oder Dispersionen und/oder deren Mischungen und/oder deren Verdünnungen sind die allgemein üblichen Mahl-, Misch-, Knet- und Anreibegeräte optional in Gegenwart üblicher Dispergierhilfsmittel einsetzbar.

Die Herstellung der erfindungsgemäßen Lösungsmittel-freien Polymere und Polymer-Mischungen sowie deren Verwendung in Druckfarben und Drucklacken sowie Primern für Holzbeschichtungen wird durch nachfolgende Beispiele erläutert. Die in den Beispielen aufgeführten Teile und Prozente beziehen sich auf das Gewicht, soweit nicht anders vermerkt. Alle Synthese-Beispiele sind unter Schutzgas, bevorzugt Stickstoff, in Glas- oder Stahlapparaturen durchgeführt worden.

### BEISPIELE

### Beispiel 1

In 175 °C temperiertes N-Methylpyrrolidon (175 g) wird unter Rühren ein Monomergemisch bestehend aus Acrylsäure (350 g) und Styrol (531 g) sowie parallel dazu Cumolhydroperoxid (18,7 g) in N-Methylpyrrolidon (50 g) über ca. 5 Stunden dosiert und eine weitere Stunde bei dieser Temperatur gehalten. Nach Abtrennung von N-Methylpyrrolidon im Vakuum bei 225 °C erhält man ein Festharz mit einer Säurezahl von 239 mg/g, einer T_{g} von 124 ^{°}C und einer M_{w} von 13.500 g/mol. Versetzt man das noch flüssige Polymer vor dem Erstarren mit Tallölfettsäure Type ®OULO 102 (Fa. Gratenau & Hesselbacher, Hamburg) (102 g) und Essigsäure (100 %, 84 g) und trägt diese Masse in Wasser (1493 g) / Ammoniak (25 %ig, 390 g) ein, wird eine Harzlösung mit ca. 30 % Festkörper-Massengehalt, einem pH-Wert von 9,1 und einer Viskosität von ca. 4.100 mPa·s (Ubbelohde) erhalten.

### Beispiel 2

In eine auf 175 °C temperierte Mischung aus N-Methylpyrrolidon (175 g) und Tallölfettsäure Type OULO 102 (196 g) wird unter Rühren ein Monomergemisch bestehend aus Acrylsäure (350 g) und Styrol (531 g) sowie parallel dazu Cumolhydroperoxid (18,7 g) in N-Methylpyrrolidon (50 g) über ca. 5 Stunden dosiert und eine weitere Stunde bei dieser Temperatur gehalten. Nach Abtrennung von N-Methylpyrrolidon im Vakuum bei 225 °C erhält man ein Festharz mit einer Säurezahl von 218 mg/g, einer T_{g} von 63 °C und einer M_{w} von 11.500 g/mol. Trägt man diese Masse in Wasser (2138 g) / Ammoniak (25 %ig, 305 g) ein, wird eine Harzlösung mit ca. 30 % Festkörper-Massenanteil, einem pH-Wert von 9,1 und einer Viskosität von ca. 900 mPa·s (Ubbelohde) erhalten.

### Beispiel 3

In 175 °C temperiertes N-Methylpyrrolidon (175 g) wird unter Rühren ein Monomergemisch bestehend aus Acrylsäure (408 g) und Styrol (472 g) sowie parallel dazu Cumolhydroperoxid (17,5 g) in N-Methylpyrrolidon (50 g) über ca. 5 Stunden dosiert und eine weitere Stunde bei dieser Temperatur gehalten. Nach Abtrennung von N-Methylpyrrolidon im Vakuum bei 225 °C versetzt man die noch flüssige Masse mit ®Edenora UKD 5020 (Sojaölfettsäure (Säurezahl: 198-203 mg/g), Fa. Henkel) oder mit ®Prifac 7968 (Sojaölfettsäure (Säurezahl: 196-202 mg/g), Fa. Unichema, Gouda, The Netherlands) (103 g), dosiert über 30 Minuten Cumolhydroperoxid (2 g) bei 225 °C und läßt weitere 90 Minuten bei dieser Temperatur reagieren. Nun wird flüchtiges Material bei 220 °C im Vakuum abgetrennt, anschließend Essigsäure (100 %, 84 g) hinzugegeben und die noch flüssige Masse (T_{g} = 53 °C) in Wasser (1766 g)/Ammoniak (25 %ig, 427 g) eingetragen. Man erhält so eine Harzlösung mit ca. 30 % Festkörper-Massenanteil, einem pH-Wert von 9,1 und einer Viskosität von ca. 2.200 mPa·s (Ubbelohde).

### Beispiel 4

In 175 °C temperiertes N-Methylpyrrolidon (175 g) wird unter Rühren ein Monomergemisch bestehend aus Acrylsäure (314 g) und Styrol (567 g) sowie parallel dazu Cumolhydroperoxid (17,7 g) in N-Methylpyrrolidon (50 g) über ca. 5 Stunden dosiert und eine weitere Stunde bei dieser Temperatur gehalten. Nach Abtrennung von N-Methylpyrrolidon im Vakuum bei 225 °C versetzt man die noch flüssige Masse mit modifizierter Fettsäure Prifac 7990 (51,4 g), dosiert über 30 Minuten Cumolhydroperoxid (2 g) bei 225 °C und läßt weitere ca. 90 Minuten bei dieser Temperatur reagieren. Nun wird flüchtiges Material bei 225 °C im Vakuum abgetrennt, anschließend Essigsäure (100 %, 84 g) hinzugegeben und die noch flüssige Masse (T_{g} = 52 °C) in Wasser (1747 g) / Ammoniak (25 %ig, 372 g) eingetragen. Man erhält so eine Harzlösung mit ca. 30 % Festkörper-Massenanteil, einem pH-Wert von 9,1 und einer Viskosität von ca. 1.900 mPa·s (Ubbelohde).

### Beispiel 5

Die Harzlösung aus Beispiel 1 (500 g) wird mit E-Wasser (100 g) versetzt und unter Stickstoff auf 90 °C erhitzt. Nach Erreichen von 90 °C wird Styrol (10 g) und parallel dazu Ammoniumperoxodisulfat (0,4 g) in Wasser (5 g) hinzugefügt und 20 Minuten bei 90 °C gerührt. Nun wird innerhalb von ca. 3 Stunden eine Dosierung von Styrol (440 g) und parallel dazu Ammoniumperoxodisulfat (2 g) in Wasser (267 g) zudosiert. Man läßt ca. 1 Stunde nachreagieren, gegebenfalls unter Zugabe eines Redoxsystems, kühlt ab und erhält so eine stippenfreie Dispersion mit einem Festkörper-Massenanteil von 45,5 %, einem pH-Wert von 8,5 und einer Viskosität von ca. 800 mPa·s (Ubbelohde).

### Beispiel 6

Die Harzlösung aus Beispiel 2 (500 g) wird mit E-Wasser (100 g) versetzt und unter Stickstoff auf 90 °C erhitzt. Nach Erreichen von 90 °C wird Styrol (10 g) und parallel dazu Ammoniumperoxodisulfat (0,4 g) in Wasser (5 g) hinzugefügt und 20 Minuten bei 90 °C gerührt. Nun wird innerhalb von ca. 3 Stunden eine Dosierung von Styrol (440 g) und parallel dazu Ammoniumperoxodisulfat (2 g) in Wasser (267 g) zudosiert. Man läßt ca. 1 Stunde nachreagieren, gegebenenfalls unter Zugabe eines Redoxsystems, kühlt ab und erhält so eine stippenfreie Dispersion mit einem Festkörper-Massenanteil von ca. 46 %, einem pH-Wert von 8,2 und einer Viskosität von ca. 90 mPa·s (Ubbelohde).

### Beispiel 7

Die Harzlösung aus Beispiel 3 (500 g) wird mit E-Wasser (100 g) versetzt und unter Stickstoff auf 90 °C erhitzt. Nach Erreichen von 90 °C wird Styrol (10 g) und parallel dazu Ammoniumperoxodisulfat (0,4 g) in Wasser (5 g) hinzugefügt und 20 Minuten bei 90 °C gerührt. Nun wird innerhalb von ca. 3 Stunden eine Dosierung von Styrol (440 g) und parallel dazu Ammoniumperoxodisulfat (2 g) in Wasser (267 g) zudosiert. Man läßt ca. 1 Stunde nachreagieren, gegebenfalls unter Zugabe eines Redoxsystems, kühlt ab und erhält so eine stippenfreie Dispersion mit einem Festkörper-Massenanteil von ca. 46 %, einem pH-Wert von 8,2 und einer Viskosität von ca. 180 mPa·s (Ubbelohde).

### Beispiel 8

Die Harzlösung aus Beispiel 4 (500 g) wird mit E-Wasser (100 g) versetzt und unter Stickstoff auf 90 °C erhitzt. Nach Erreichen von 90 °C wird Styrol (10 g) und parallel dazu Ammoniumperoxodisulfat (0,4 g) in Wasser (5 g) hinzugefügt und 20 Minuten bei 90 °C gerührt. Nun wird innerhalb von ca. 3 Stunden eine Dosierung von Styrol (440 g) und parallel dazu Ammoniumperoxodisulfat (2 g) in Wasser (267 g) zudosiert. Man läßt ca. 1 Stunde nachreagieren, gegebenfalls unter Zugabe eines Redoxsystems, kühlt ab und erhält so eine stippenfreie Dispersion mit einem Festkörper-Massenanteil von ca. 46 %, einem pH-Wert von 8,2 und einer Viskosität von ca. 530 mPa·s (Ubbelohde).

### Beispiel 9 (entsprechend DE-A 195 08 191)

In eine auf 175 °C temperierte Mischung aus N-Methylpyrrolidon (33 g) und ε-Caprolacton (156 g) wird unter Rühren ein Monomergemisch bestehend aus Acrylsäure (367 g) und Styrol (531 g) sowie parallel dazu Cumolhydroperoxid (45 g) über ca. 5 Stunden dosiert, wobei die Temperatur sukzessive auf 215 °C gesteigert wird, ohne daß ein signifikantes Abdestillieren erfolgt. Nach einer weiteren Stunde bei 220 °C und Abtrennung von N-Methylpyrrolidon im Vakuum bei 220 °C erhält man ein Festharz mit einer Säurezahl von 210 mg/g, einer T_{g} von 62 °C und einer M_{w} von 5.300 g/mol. Trägt man das noch flüssige Polymer vor dem Erstarren in eine Mischung aus Wasser (1607 g) / Ammoniak (25 %ig, 286 g) ein, erhält man eine Harzlösung mit ca. 35 % Festkörper-Massenanteil, einem pH-Wert von 8,7 und einer Viskosität von 800 mPa·s (Ubbelohde).

### Beispiel 10

34 Gew.-Teile der 35%igen Harz-Lösung aus Beispiel 9 werden mit 57 Teilen Dispersion aus Beispiel 7, mit 7 Teilen Wasser, mit 2 Teilen Butyldiglykol und mit 0,4 Teilen ®Surfinol 104 (Entschäumer, Air Products) kräftig durchmischt. Der so erhaltende Hochglanzüberdrucklack kann anschließend mit Wasser auf praxisgerechte 30 s DIN-Auslaufzeit (4 mm/23 °C) eingestellt werden (40 % Festkörper-Massenanteil).

### Beispiel 11

17 Teile ®Permanent Gelb GRX (Hoechst AG) wird mit 77 Gew.-Teilen der 35%igen Harz-Lösung aus Beispiel 9 , 0,5 Teilen Butyldiglykol, 0,4 Teilen Entschäumer Surfinol 104 sowie 1 Teil Wasser 30 Minuten vorzugsweise bei Raumtemperatur mit Glaskugeln im Paintshaker angerieben. Nach Absieben über ein 100 mm-Sieb wird eine Stammfarbe erhalten, die nach Zusatz von Dispersion des Beispiels 8 eine hervorragend geeignete Wasserfarbe für den Drucksektor gibt (7 % Pigment-Massenanteil).

### Beispiel 12

In 175 °C temperiertes N-Methylpyrrolidon (175 g) wird unter Rühren ein Monomergemisch bestehend aus Acrylsäure (350 g) und Styrol (531 g) sowie parallel dazu Cumolhydroperoxid (18,7 g) in N-Methylpyrrolidon (50 g) über ca. 5 Stunden dosiert und eine weitere Stunde bei dieser Temperatur gehalten. Nach Abtrennung von N-Methylpyrrolidon im Vakuum bei 225 °C erhält man ein Festharz mit einer Säurezahl von 239 mg/g, einer T_{g} von 124 °C und einer M_{w} von 13.500 g/mol. Versetzt man das noch flüssige Polymer vor dem Erstarren mit Juvandolfettsäure (Sonnenblumenölfettsäure) (102 g) und Essigsäure (100 %, 84 g) (T_{g} = 37 °C) und trägt diese Masse in Wasser (2290 g)/Ammoniak (25 %ig, 420 g) ein, wird eine Harzlösung mit ca. 30 % Festkörper-Massenanteil, einem pH-Wert von 9,1 und einer Viskosität von ca. 3.200 mPa·s (Ubbelohde) erhalten.

### Beispiel 13

Die Harzlösung aus Beispiel 12 (1815 g) wird unter Stickstoff auf 90 °C erhitzt. Nach Erreichen von 90 °C wird Styrol (20 g) und parallel dazu Ammoniumperoxodisulfat (0,8 g) in E-Wasser (10 g) hinzugefügt und 20 Minuten bei 90 °C gerührt. Nun wird innerhalb von ca. 3 Stunden eine Mischung von Styrol (878 g) und 2-Ethylhexylacrylat (225 g) sowie parallel dazuAmmoniumperoxodisulfat (5 g) in entionisiertem Wasser (540 g) dosiert. Man läßt ca. 1 Stunde nachreagieren, gegebenfalls unter Zugabe eines Redoxsystems, kühlt ab und erhält so eine stippenfreie Dispersion mit einem Festkörper-Massenanteil von ca. 46 %, einem pH-Wert von 7,9 und einer Viskosität von 750 mPa·s (Ubbelohde).

### Beispiel 14

Eine Dispersion entsprechend Beispiel 5 (92,5 g) wird vorgelegt und unter Rühren ®Dowanol DPM (Dow Chemical Europe, Frankfurt) (5,0 g) langsam hinzugefügt. Danach werden ®Ceridust 9615 A (Wachs, Hoechst AG) (2,0 g) und ®Tego Foamex 805/50% in Wasser (Tego-Chemie, Essen) (0,5 g) 15 Minuten mit dem Dissolver eingearbeitet. Man erhält so einen wäßrigen, farblos glänzenden Schleifgrund mit einem Festkörper-Massenanteil von 44,5 % mit einer Dichte von 1,05 g/cm³, einer Auslaufzeit von 30 s nach DIN 53211 (4 mm/23 °C), einer Staubtrocknungszeit (100 µm Naßfilm/23 °C) von ca. 10 Minuten, einer forcierten Trocknungszeit (100 µm Naßfilm/60 °C) von ca. 2 Minuten und einer Blockfestigkeit 10 N/cm² bis 40 °C.

### Beispiel 15

Eine Dispersion entsprechend Beispiel 5 (37,3 g) wird vorgelegt und unter Rühren der Dowanol DPM (3,0 g) langsam hinzugefügt. Danach werden nacheinander ®Agitan 295 (Münzing Chemie GmbH, Heilbronn) (0,2 g), ®Kronos 2310 (Kronos Titan GmbH, Leverkusen) (15,0 g), ®Blanc fixe (Sachtleben Chemie GmbH, Duisburg) (15,0 g), ®Mikrotalkum AT 1 (Norwegian Talc Deutschland GmbH, Bad Soden-Salmünster) 14,0 g und ®Millicarb (Omya GmbH, Köln) (14,0 g) zugegeben und ca. 15 Minuten mittels Dissolver oder Perlmühle eindispergiert. Anschließend kommt Ceridust 9615 A (1,5 g) dazu und wird ca. 5 Minuten mit Dissolver eingearbeitet. Man erhält so einen wäßrigen, weiß matten Holzspachtelkitt mit einem Festkörper von 76,7 % mit einer Dichte von 1,65 g/cm³, einer Staubtrocknung 100 µm Naßfilm/23 °C (50 % Luftfeuchte) von ca. 2-3 Minuten, forcierte Trocknung 100 µm Naßfilm/60 °C von 2 Minuten und einer Blockfestigkeit 10 N/cm² bis 40 °C.

## Patentansprüche

1. Lösemittel-freie Kunstharzmischungen, enthaltend
a) ein gegebenenfalls neutralisiertes oder teilneutralisiertes Kunstharz A, hergestellt durch Polymerisation von α,β-ethylenisch ungesättigten (C₃-C₆)-Carbonsäuren mit weiteren ethylenisch ungesättigten Verbindungen und Umsetzung mit einer Carbonsäuregruppen-haltigen Verbindung mit mindestens 7 Kohlenstoffatomen, und gegebenenfalls
b) ein wasserunlösliches Polymer B in Form von Latexteilchen, herstellbar durch Emulsionspolmerisation von ethylenisch ungesättigten Verbindungen in Gegenwart des Kunstharzes A.

2. Kunstharzmischung nach Anspruch 1, dadurch gekennzeichnet, daß das Kunstharz A eine Säurezahl im Bereich von 90 bis 400 mg/g aufweist und die Glasübergangstemperatur des Kunstharzes A zwischen 0 und 180 °C liegt.

3. Kunstharzmischung nach Anspruch 1, dadurch gekennzeichnet, daß als Carbonsäuregruppen-haltige Verbindung eine Naturharzsäure aus der Gruppe Kolophonium, Wurzelharz, Tallharz und deren Umsetzungsprodukte mit α,β-ethylenisch ungesättigten (C₄-C₇)-Carbonsäuren oder deren Anhydriden eingesetzt wird.

4. Kunstharzmischung nach Anspruch 1, dadurch gekennzeichnet, daß als Carbonsäuregruppen-haltige Verbindung eine Fettsäure mit 8 bis 30 Kohlenstoffatomen eingesetzt wird.

5. Kunstharzmischung nach Anspruch 1, dadurch gekennzeichnet, daß als Carbonsäuregruppen-haltige Verbindung eine ungesättigte natürliche Fettsäure aus der Gruppe Kokosfettsäure, Palmölfettsäure, Tallölfettsäure, Sonnenblumenölfettsäure oder teilweise hydrierte Fettsäure aus der Gruppe Kokosfettsäure, Palmölfettsäure, Tallölfettsäure, Sonnenblumenölfettsäure oder eine synthetische Fettsäure aus der Gruppe Isononansäure, 3,5,5-Trimethylhexansäure, C₁₀-Trialkylessigsäure, Isodecansäure, Isoundecansäure, Isotridecansäure, Palmitinsäure, Stearinsäure eingesetzt wird.

6. Verfahren zur Herstellung der Lösemittel-freien Kunstharzmischungen nach Anspruch 1, indem
a) ein Kunstharz A hergestellt wird durch Polymerisation von α,β-ethylenisch ungesättigten (C₃-C₆-)-Carbonsären mit weiteren ethylenisch ungesättigten Verbindungen und das Copolymerisat umgesetzt wird mit Carbonsäuregruppen-haltigen Verbindungen mit mindestens 7 Kohlenstoffatomen, und gegebenenfalls anschließend neutralisiert oder teilneutralisiert wird und gegebenenfalls
b) ein wasserunlösliches Polymer B in Form von Latexteilchen hergestellt wird durch Emulsionspolymerisation von ethylenisch ungesättigten Verbindungen in Gegenwart des gegebenenfalls zumindest teilneutralisierten Polymeren A.

7. Verfahren nach Anspruch 6, dadurch gekennzeichnet, daß die Carbonsäuregruppen-haltige Verbindung mit mindestens 7 Kohlenstoffatomen erst nach der Polymerisation der α,β-ethylenisch ungesättigten (C₃-C₆)-Carbonsäuren mit weiteren ungesättigten Verbindungen zugesetzt und bei Temperaturen von 100 bis 230 °C umgesetzt wird.

8. Verfahren nach Anspruch 6, dadurch gekennzeichnet, daß bei der Herstellung der Kunstharze A flüchtige basische Verbindungen eingesetzt werden, die unter den Reaktionsbedingungen mit den Carbonsäuregruppen keine kovalente Bindung ausbilden.

9. Verwendung der Lösemittel-freien Kunstharzmischungen nach Anspruch 1 zur Herstellung von Bindemitteln für Druckfarben und Drucklacke auf Wasserbasis.

10. Verwendung der Lösemittel-freien Kunstharzmischungen nach Anspruch 1 zur Herstellung von Bindemitteln für Grundierungen für Holz.
